# EUROPÄISCHE PATENTSCHRIFT

(11) **EP 0 477 350 B1**
(45) Veröffentlichungstag und Bekanntmachung des Hinweises auf die Patenterteilung: **16.03.1994**
(21) Anmeldenummer: 91908553.0
(22) Anmeldetag: 12.04.1991
(51) Int. Cl.: C21C 5/44

(54) **BASISCHE, FEUERFESTE AUSKLEIDUNG FÜR EIN METALLURGISCHES GEFÄSS SOWIE VERFAHREN ZU DEREN HERSTELLUNG**
BASIC REFRACTORY LINING FOR A METALLURGICAL VESSEL AND A PROCESS FOR PRODUCING SUCH LINING
REVETEMENT REFRACTAIRE BASIQUE POUR UN RECIPIENT METALLURGIQUE ET PROCEDE DE FABRICATION D'UN TEL REVETEMENT

(30) Priorität: 12.04.1990 AT 880/90
(43) Veröffentlichungstag der Anmeldung: 01.04.1992
(73) Patentinhaber: Veitsch-Radex Aktiengesellschaft für feuerfeste Erzeugnisse, A-1040 Wien (AT)
(72) Erfinder: MADRITSCH, Gerhard, A-1130 Wien (AT)
(74) Vertreter: Becker, Thomas, Dr., Dipl.-Ing.
(86) Internationale Anmeldenummer: AT9100055
(87) Internationale Veröffentlichungsnummer: WO9116460

(56) Entgegenhaltungen:
- EP-A- 0 064 863
- EP-A- 0 318 701
- DE-A- 2 843 735
- DE-C- 2 438 928
- GB-A- 2 008 438
- GB-A- 2 105 828

## Beschreibung

Die Erfindung betrifft eine basische, feuerfeste Auskleidung für ein metallurgisches Gefäß sowie ein Verfahren zu deren Herstellung.

Die Auskleidungen metallurgischer Gefäße für die Stahlherstellung (insbesondere Elektroöfen, Konverter, Pfannen) werden aus metallurgischen Gründen vermehrt mit basischen Steinen hergestellt.

Auskleidungen mit trockenem, basischem Schüttmaterial sind für horizontale Auskleidungen (z.B. Böden von Elektroöfen) bekannt. Im Fall von senkrechten Gefäßwänden stellt sich jedoch das Problem, das Schüttmaterial an seinem Platz zu halten, bis es durch die erste Beschickung mit einem Stahlbad zu einer Verfrittung auf der Innenseite der Auskleidung kommt.

Solche vertikalen Auskleidungen mit trockenem, basischen Schüttmaterial kommen bei Induktionstiegeln zur Anwendung. Das trockene Schüttmaterial ohne Zusatz von Bindemitteln wird zwischen eine, den Innenraum des Gefäßes bestimmende Stahlform und die Außenwand des Gefäßes gestampft. Diese Stahlform ist verloren, das Verfahren aufwendig, und das Schüttmaterial kann nicht ausreichend verdichtet und entlüftet werden.

Nach der EP-A2-318 701 wird zur Wiederherstellung der Auskleidung von metallurgischen Pfannen eine den Pfannenhohlraum bestimmende Form eingebracht und der Raum zwischen der Form und der verschlissenen Oberfläche der Auskleidung mit einer schüttfähigen feuerfesten Masse ausgefüllt, die durch Vibration kompaktiert wird und sich mit dem bestehenden Auskleidungsrest zu einer monolithischen Auskleidung verbindet. Dabei ist zur Aktivierung der Bindungsmitttel, zum Transport und zur Kompaktierung die Beimischung von Wasser zu solchen Massen notwendig. Dies macht den Einsatz von basischen Materialien nicht wirtschaftlich, weil es zur Hydratation und damit zum Verlust der Feuerfesteigenschaften kommt und die Auskleidungen beim Aufheizen des Gefäßes durch Dehnungsrisse beschädigt werden.

Die EP-A1-64 863 betrifft die Erneuerung der teilweise verschlissenen Arbeitsschicht durch eine dünne monolithische Schicht und ein Verfahren zum Einbringen derselben in ein metallurgisches Gefäß, insbesondre in einen Tundish. Feuerfeste Materialien werden mit wärmehärtendem Kunstharz, anorganischem Bindemittel oder zusätzlichem anorganischem Hydrat in den vorgeheizten Spalt zwischen verschlissener Schicht und Form durch Druckgas eingebracht. Die Form hält die Füllung so lange, bis die weitere Erwärmung durch die Form hindurch die eingeblasene Mischung aushärtet und diese selbsttragend werden läßt. Nach Entfernen der Form wird das Gefäß bis zur Betriebsbereitschaft weiter aufgeheizt. Wegen des hohen Zeit- und Energieaufwands für Durchwärmung und Aushärtung eignet sich dieses Verfahren nicht zum Neubau einer kompletten monolithischen Arbeitsschicht, die in metallurgischen Gefäßen wesentlich stärker als 100 mm ist.

Aufgabe der Erfindung ist es, eine Auskleidung zu schaffen, die die oben beschriebenen Nachteile vermeidet und die eine Arbeitsschicht enthält, die aus einem trockenen, basischen Schüttmaterial herstellbar ist sowie ein Verfahren zur Herstellung einer solchen Auskleidung anzugeben.

Erfindungsgemäß werden dazu Auskleidungen nach den Ansprüchen 1 und 2 sowie Verfahren nach den Ansprüchen 9 und 17 vorgeschlagen. Bevorzugte Ausführungsformen sind in den Ansprüchen 3-8, 10-16 und 18 definiert.

Als Arbeitsschicht wird dabei die wesentliche Schicht der Auskleidung des Gefäßes bezeichnet, die mit dem flüssigen Stahl in Kontakt kommt und abgesehen vom Verschleiß dauerhaft im Gefäß verbleibt. Die Auskleidung umfaßt in der ersten Ausführungsform eine Arbeitsschicht (Bauschicht), die nur zum Aufbau der Auskleidung dient. Die Arbeitsschicht wird als trockenes Schüttmaterial in das Gefäß eingebracht, das heißt, sie ist im wesentlichen wasserfrei. Das Schüttmaterial kann jedoch mit Öl, Bitumen, Kunstharz u. dgl. getränkt sein, um beispielsweise die Einformung zu erleichtern oder die Staubentwicklung zu vermindern.

Sintermagnesit oder -dolomit verfritten durch Einfluß von Temperatur etwa ab 1200°C und bilden eine verfestigte Schicht. Ausreichend für eine solche keramische Bindung bis zu einer Schichtdicke von 40 bis 60 mm ist die Temperatur des flüssigen Stahls. Eine solche, nach Eingießen des Stahls sich durch Temperatureinwirkung aufbauende, keramisch gebundene Schicht bildet eine tragende monolithische Wand, die während des Betriebes auf der Stahlbadseite laufend verschleißt, sich aber auf der kalten Seite in Richtung Pfannenmantel fortwährend aufbaut. Die Dehnung der keramischen Schicht infolge von Temperaturschwankungen beim Füllen und Entleeren der Pfanne wird von dem noch nicht keramisch gebundenen, auf der kalten Seite liegenden Schüttmaterial aufgenommen, so daß Risse in der keramisch gebundenen Schicht vermieden werden.

Die Abdeckschicht soll bei vertikalen Auskleidungen das Schüttmaterial im kalten Zustand abstützen und beim Füllen des Gefäßes mit flüssigem Stahl der erodierenden Wirkung des Stahls standhalten und sie soll in der Folge durch Einwirkung der Temperatur des Stahlbades keramisch abbinden, die Wärme auf das auf der kalten Seite befindliche lose Schüttmaterial weiterleiten und sich mit diesem verfritten. Die Abdeckschicht besteht aus einer Abdeckmasse, wie Mörtel oder Beton, welche bei Raumtemperatur oder unter leichter Erwärmung abbindet.

Bei der zweiten Ausführungsvariante der Erfindung nach Anspruch 2 ist es besonders günstig, wenn die feuerfesten Platten im wesentlichen rechteckig sind, wobei die längere Plattenseite parallel zur Wandhöhe verläuft. Dabei können die längeren Plattenseiten in Richtung Gefäßmitte abgeschrägt und stumpf gestoßen oder ganz oder teilweise überlappt angeordnet sein, während die kürzeren Plattenseiten stumpf gestoßen oder ganz oder teilweise überlappend sind, wobei die Platten in ringförmiger Anordnung eine stabile Form bilden. In diesem Fall kann die Auskleidung ohne besondere Maßnahmen zur Abstützung hergestellt werden.

Die Verfrittung der Arbeitsschicht wird beschleunigt, wenn die feuerfesten Platten auf der zum Schüttmaterial zugewendeten Seite ein Profil aufweisen, welches die Wärmeleitfähigkeit erhöht und/oder eine Verankerung im Schüttmaterial gewährleistet.

Vorzugsweise ist zwischen der Seitenwand des Gefäßes und der feuerfesten, basischen Arbeitsschicht eine Isolierschicht vorgesehen, die aus einer aufgespritzen und bei Raumtemperatur ausgehärteten Masse, vorzugsweise aus Schamotte oder Hochtonerde, besteht, welche vorzugsweise innen zylindrisch ausgedreht ist. Durch das Ausdrehen wird erreicht, daß die Isolierschicht an jeder Stelle eine vorgegebene maximale Dicke nicht übersteigt. Dadurch ist gewährleistet, daß die Vorrichtung zur Aufbringung der Arbeitsschicht nicht behindert wird.

Das Schüttmaterial, das die Arbeitsschicht bildet, kann beispielsweise aus Sintermagnesit, vorzugsweise mit erhöhtem Kalkgehalt von mehr als 7 % CaO, Sinterdolomit oder Mischungen aus Sintermagnesit und Sinterdolomit mit Chromerz oder Korund bestehen. Insbesondere hat es sich bewährt, wenn dem Schüttmaterial, das die Arbeitsschicht bildet, als Sinterhilfe Zusätze wie Eisenoxid, Borsäure, Borverbindungen, trockenes Wasserglas oder Mikropulver aus Metalloxiden beigemischt werden.

Das Erhitzen der Auskleidung erfolgt entweder durch das Einbringen von Brennern in das Gefäß, wobei die Auskleidung ungefähr auf Prozeßtemperatur gebracht wird oder beim erstmaligen Einbringen flüssigen Stahls.

Das Einbringen des Schüttmaterials kann in zwei oder mehreren konzentrischen Schichten erfolgen. Dabei ist es besonders günstig, wenn die inneren Schichten des Schüttmaterials mit Sinterhilfsmitteln angereichert sind. Durch diesen geschichteten Aufbau der Auskleidung kann erreicht werden, daß sich die verfrittete, monolithische Schicht besonders schnell einstellt, so daß die Gefahr von Erosionen zu Beginn vermindert wird.

Es ist vorteilhaft, wenn nach Einbringen des Schüttmaterials dieses lagenweise durch Vibration entlüftet wird. Es hat sich besonders bewährt, wenn das Schüttmaterial lagenweise durch Preßdruck und/oder Vibration verdichtet wird. Durch die lagenweise Verdichtung kann eine äußerst dichte Schüttung erzielt werden. Die Höhe der einzelnen Lagen sollte dabei zwischen 250 mm und 400 mm betragen. Bei höheren Lagen können Lufteinschlüsse nicht mehr zuverlässig aus der Schüttung entfernt werden.

Eine Vorrichtung zur Durchführung des Verfahrens beschreibt die WO 91/16460.

Im folgenden wird die Erfindung anhand der in den Figuren dargestellten Ausführungsbeispiele näher erläutert. Die Figuren stellen dar:
Fig. 1 zeigt einen Schnitt durch ein metallurgisches Gefäß mit einer erfindungsgemäßen Auskleidung.
Fig. 2 zeigt einen teilweisen Schnitt einer Ausführungsvariante der erfindungsgemäßen Auskleidung.
Die Fig. 3 bis 8 zeigen Ausführungsbeispiele einer ebenen bzw. einer schalenförmigen Platte.

Das Verfahren wird am Beispiel der Herstellung einer Auskleidung für eine große Pfanne zur Stahlherstellung erklärt..

Das Gefäß 1 umfaßt einen Behälter 2 aus starkem Stahlblech, der innen mit einer feuerfesten Auskleidung 3 versehen ist. Der Bau der feuerfesten Auskleidung 3 der vertikalen Pfannenseitenwand 4 bedarf einer stützenden Abdeckschicht 8. Die Herstellung der Auskleidung des liegenden Pfannenbodens 5 kommt ohne diese Stützung aus. Diese Auskleidung besteht aus einer isolierenden Außenschicht 6, der feuerfesten, basischen Arbeitsschicht 7 und der Abdeckschicht 8.

Die isolierende Außenschicht 6 besteht aus einer aufgespritzten und bei Raumtemperatur aushärtenden, isolierenden Masse aus Schamotte. Dieses Spritzverfahren in Kombination mit einer heute üblichen Arbeitsauskleidung aus Steinen ist deshalb nicht anzuwenden, weil die aufgespritzte Isolierung zu wenig ebenflächig für den satten Anschluß der Steine ware. Das neue Verfahren sieht als Arbeitsauskleidung 7 ein schüttbares, basisches Material vor, das Unebenheiten der isolierenden Außenschicht 6 füllend ausgleicht.

Die Abdeckschicht 8, ein streifenweise monolithischer Formkörper, hergestellt aus einer Abdeckmasse, die bei Raumtemperatur aushärtet und sich verfestigt, dient an der Seitenwand 4 zum Halten der Arbeitsschicht 7 bei Raumtemperatur, aber auch als massiver Schutz gegen den Stahl beim ersten Füllen der Pfanne.

Die basischen, feuerfesten Schüttmaterialien wie Sinterdolomit, Sintermagnesit, Gemische aus Sintermagnesit und Dolomit oder Gemische mit Chromerz oder Korund, sind entsprechend den Eigenschaften des herzustellenden Stahls auszuwählen. Diese Materialien verfritten bei Temperatureinwirkung unterschiedlich und es kann sich als notwendig erweisen, den Materialien Sinterhilfen wie z.B. Eisenoxid oder trockenes Wasserglas zuzusetzen. Insbesondere kann es notwendig sein, die Sinterung des Schüttmaterials in der Anfangsphase des Gebrauchs der Neuauskleidung bei niedrigeren Temperaturen herbeizuführen. Um dies zu erreichen, muß das Schüttmaterial aus parallel zur Gefäßwand verlaufenden Schichten und zwar von der kalten in Richtung Feuerseite der Wand mit zunehmend steigenden Zusätzen von Sinterhilfen bestehen.

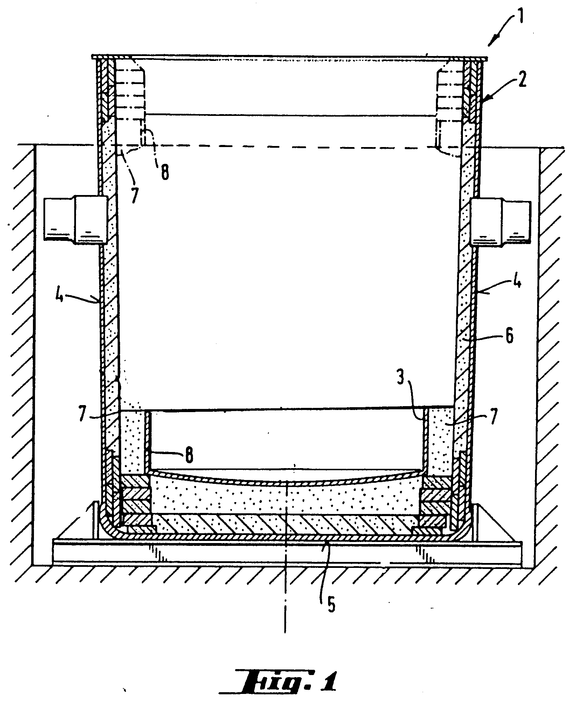

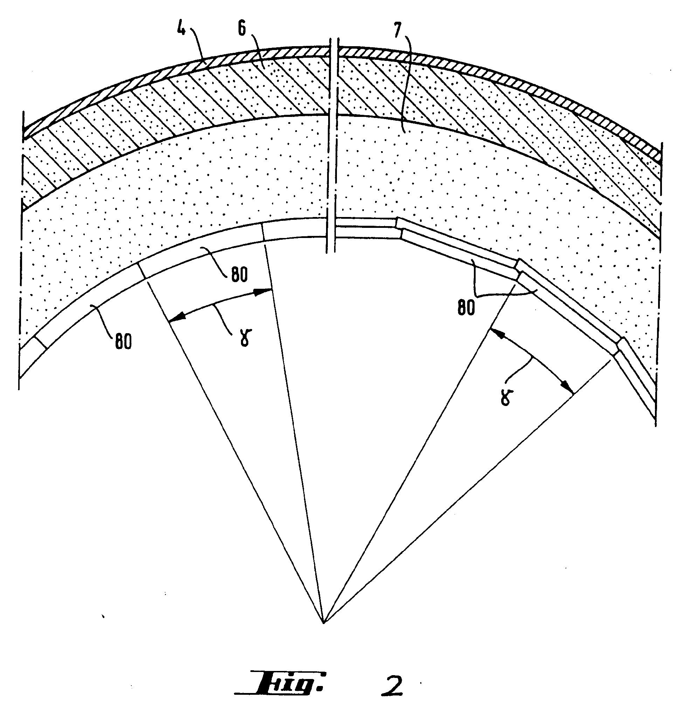

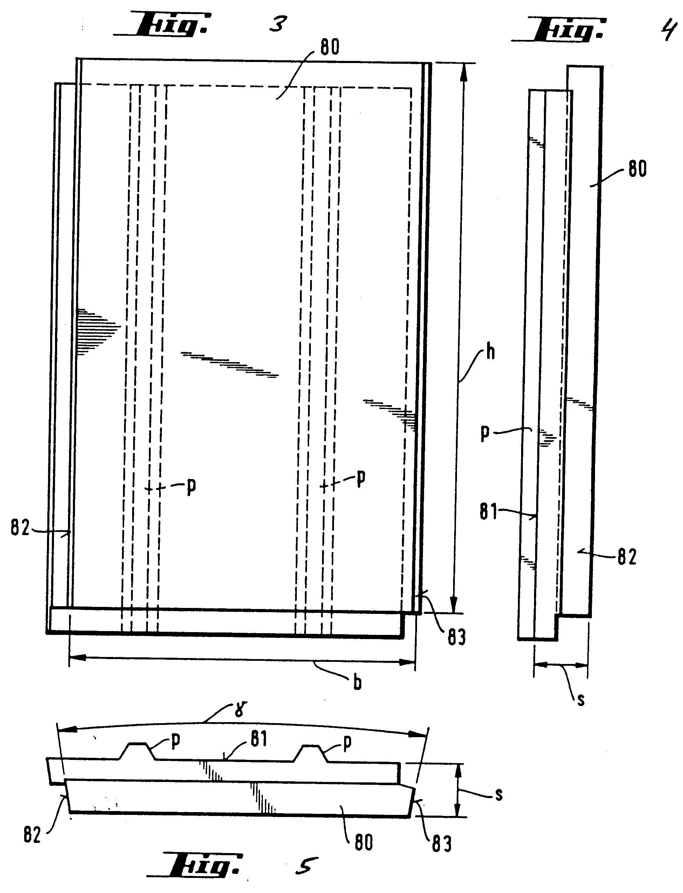

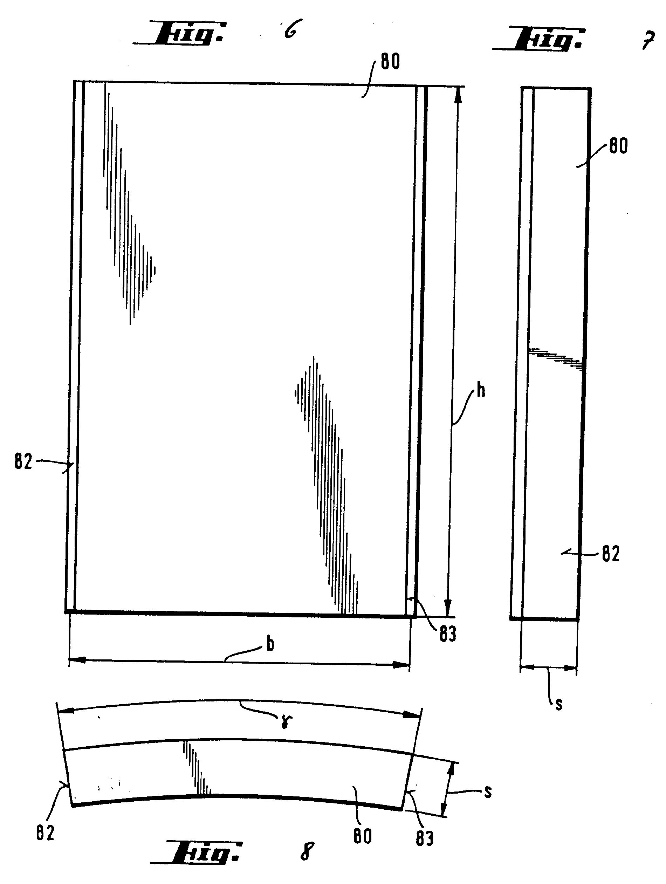

Das Verfahren zur Herstellung von feuerfesten, basischen, monolithischen Wandauskleidungen, hauptsächlich mit trockenem Schüttmaterial, kann auf folgende Weise zur Anwendung kommen, wobei auf die Fig. 2 bis 8 Bezug genommen wird:

Ein Ringkörper aus feuerfesten Platten 80 gibt der Auskleidung die innere Form. Der Raum zwischen den Platten 80 und der isolierenden Außenschicht 6 wird mit Schüttmaterial 7 gefüllt und dieses wird verdichtet, sei es durch Stampfung oder Vibration, per Hand oder maschinell. Lagenweise wird Ring auf Ring gesetzt.

Die feuerfesten Platten 80 leiten die Temperatur des Stahlbades derart auf die Hinterfüllung weiter, daß diese auf der dem Stahlbad zugewendeten Seite verfrittet und sich verfestigt und sich mit den Steinplatten verbindet. Die Platten 80 halten das Schüttmaterial und schützen vor dem Stahlstrahl beim ersten Eingießen in das Gefäß. Die bevorzugte Plattenform ist für die Fläche mit den Seiten b und h ein stehendes Rechteck, dessen längere Seite von der Lagenhöhe h und diese von der Verdichtungsmöglichkeit des Materials bestimmt wird. Die Plattenstärke s ist hauptsächlich von der notwendigen Stabilität und der Wärmeleitfähigkeit der Platten 80 abhängig. Die der Schüttung zugewandte Fläche 81 der Platte 80 weist bevorzugt ein kantiges Profil p zur Verankerung und zur besseren Wärmeweiterleitung auf; die stehenden Seitenflächen 82, 83 sind bevorzugt radial zur Gefäßmitte mit dem Winkel γ abgeschrägt.

Die Platten 80 können eben (Fig. 3-5) oder schalenförmig (Fig. 6-8) ausgeführt sein. Die Seitenflächen 82, 83 können stumpf gestoßen oder über die ganze oder einen Teil der Seitenlänge abgeplattet sein oder mit Nut und Feder ausgeführt sein.

Die naßverlegte Arbeits-(Bau)schicht trocknet bei Raumtemperatur. Dieser Vorgang kann durch Heizung beschleunigt werden. Aus Gründen der Stahlprozeßführung können die Gefäße auf Arbeits-temperatur vorgeheizt werden. Zur Erhöhung der Auskleidungsstabilität können die Gefäße vor erstem Gebrauch derart vorgeheizt werden, daß sich die Bauschicht mit Teilen der dahinter liegenden Arbeitsschicht keramisch verbindet.

Das Schüttmaterial der Arbeitsschicht kann beispielsweise aus folgenden Materialien bestehen: Sinterdolomit, Sintermagnesit, Sintermagnesit mit erhöhtem Kalkgehalt, Gemische aus Sintermagnesit/Sinterdolomit, dem Stahlprozeß angepaßt Gemische aus Sintermagnesit mit Chromerz/Korund. Abhängig von der Prozeßtemperatur können Sinterhilfsmittel zugesetzt werden, wie Eisenoxid, Borsäure, Borverbindungen, trockenes Wasserglas, sowie Mikropulver aus Metalloxiden, z.B. Manganoxid. Weiters können in bekannter Art metallurgische Zusätze verwendet werden.

## Patentansprüche

1. Basische, feuerfeste Auskleidung (3) für ein metallurgisches Gefäß (1) mit einer Arbeitsschicht (7), die vor der erstmaligen Erhitzung des Gefäßes (1) als verdichtete Schüttung eines trockenen, basischen Materials vorliegt, welche zum Inneren des Gefäßes (1) hin durch eine chemisch erhärtete Abdeckschicht (8) gehalten ist und die Arbeitsschicht (7) nach der Beschickung des Gefäßes (1) mit flüssigem Stahl teilweise als monolithische Schicht vorliegt.

2. Basische, feuerfeste Auskleidung (3) für ein metallurgisches Gefäß (1) mit einer Arbeitsschicht (7), die vor der erstmaligen Erhitzung des Gefäßes (1) als verdichtete Schüttung eines trockenen, basischen Materials vorliegt, welche im Bereich von Seitenwänden (14) des Gefäßes (1) zum Innenraum des Gefäßes (1) hin durch einen Ringkörper aus feuerfesten Platten (80) gehalten ist und die Arbeitsschicht (7) nach der Beschickung des Gefäßes (1) mit flüssigem Stahl teilweise als monolithische Schicht vorliegt.

3. Auskleidung nach Anspruch (2), bei der die feuerfesten Platten (80) im wesentlichen rechteckig sind, wobei die längere Plattenseite (h) vertikal verläuft.

4. Auskleidung nach Anspruch 2 oder 3, bei der die feuerfesten Platten (80) auf der der Arbeitsschicht (7) zugewandten Seite ein Profil (p) aufweisen.

5. Auskleidung nach Anspruch 1 oder 2, bei der zwischen der Seitenwand (4) des Gefäßes (1) und der Arbeitsschicht (7) eine Isolierschicht (6) vorgesehen ist.

6. Auskleidung nach Anspruch 5, bei der die Isolierschicht (6) aus einer aufgespritzten und bei Raumtemperatur ausgehärteten Masse, vorzugsweise aus Schamotte oder Hochtonerde besteht.

7. Auskleidung nach Anspruch 1 oder 2, bei der Arbeitsschicht aus Sintermagnesit, vorzugsweise mit erhöhtem Kalkgehalt von mehr als 7 % CaO, Sinterdolomit oder Mischungen von Sintermagnesit und Sinterdolomit mit Chromerz oder Korund besteht.

8. Auskleidung nach Anspruch 1 oder 2, bei der die Arbeitsschicht (7) Sinterzusätze wie Eisenoxid, Borsäure, Borverbindungen, trockenes Wasserglas oder Micropulver aus Metalloxiden enthält.

9. Verfahren zur Herstellung einer Auskleidung nach einem der Ansprüche 1 oder 5 bis 8 mit folgenden Schritten:
- Einbringen einer Schablone mit Abstand zur Gefäßwand,
- Füllung des Raumes zwischen der Gefäßwand und der Schablone mit der Schüttung für die Arbeitsschicht
- Verdichtung der Schüttung vorzugsweise durch Vibrieren, Rütteln oder Stampfen,
- Weiterbewegen der Schablone zum nächsten auszukleidenden Wandabschnitt beziehungsweise Entnahme der Schablone,
- Aufbringen der Abdeckschicht (8) auf die Innenseite der Schüttung,
- Trocknung und Erhärtung der feuerfesten Abdeckschicht,
- Erhitzen der Auskleidung.

10. Verfahren nach Anspruch 9, bei dem eine Abdeckmasse gewählt wird, die durch den Einfluß der Temperatur des Stahlbades keramisch bindet und die Temperatur auf das Schüttmaterial weiterleitet, so daß dieses auf der dem Stahlbad zugewandten Seite verfrittet und sich verfestigt.

11. Verfahren nach Anspruch 9 oder 10, bei dem das Erhitzen des Gefäßes vor dem Einbringen des Stahlbades durch Brenner erfolgt.

12. Verfahren nach einem der Ansprüche 9 bis 11, bei dem das Einbringen des Schüttmaterials in zum Boden des Gefäßes annähernd parallelen Lagen erfolgt.

13. Verfahren nach einem der Ansprüche 9 bis 12, bei dem das Einbringen des Schüttmaterials in ein Gefäß mit runden Wänden in spiralförmigen Lagen vom Bodenbereich Richtung Gefäßrand erfolgt.

14. Verfahren nach einem der Ansprüche 9 bis 13, bei dem das Einbringen des Schüttmaterials in zwei oder mehreren konzentrischen Schichten erfolgt.

15. Verfahren nach Anspruch 14, bei dem zur Ausbildung der inneren Schicht(en) ein Schüttmaterial mit Sinterhilfsmitteln eingesetzt wird.

16. Verfahren nach einem der Ansprüche 9 bis 15, bei dem die Abdeckschicht durch geformtes Aufpressen, Gießen oder Schleudern oder Spritzen aufgetragen wird.

17. Verfahren zur Herstellung einer Auskleidung nach einem der Ansprüche 2 bis 8 mit folgenden Schritten:
- Einbringen von einem, mindestens teilweise den Innenraum des Gefäßes bestimmenden Ringkörper aus feuerfesten Platten,
- Füllung des Raumes zwischen der Gefäßwand und dem Ringkörper mit der Schüttung für die Arbeitsschicht,
- Verdichtung der Schüttung vorzugsweise durch Vibrieren, Rütteln oder Stampfen,
- Erhitzen der Auskleidung.

18. Verfahren nach Anspruch 17 mit der Maßgabe, daß die feuerfesten Platten eine ausreichend hohe Wärmeleitfähigkeit aufweisen, um die Temperatur des Stahlbades derart auf das Schüttmaterial weiterzuleiten, daß dieses auf der dem Stahlbad zugewandten Seite verfrittet und sich verfestigt.

## Claims

1. Basic, refractory lining (3) for a metallurgical vessel (1) with a working layer (7) which is present before the first heating of the vessel (1) as compressed fill of a dry, basic material which is held towards the interior of the vessel (1) by means of a chemically hardened cover layer (8) and the working layer (7) is present after the loading of the vessel (1) with liquid steel partially as monolithic layer.

2. Basic, refractory lining (3) for a metallurgical vessel (1) with a working layer (7) which is present before the first heating of the vessel (1) as compressed fill of a dry, basic material which in the region of side walls (14) of the vessel (1) is held towards the interior of the vessel (1) by means of an annular body of refractory plates (80), and the working layer (7) is present after the loading of the vessel (1) with liquid steel partially as monolithic layer.

3. Lining according to claim 2 , where the refractory plates (80) are substantially rectangular, whereby the longer plate side (h) extends vertically.

4. Lining according to claim 2 or 3, where the refractory plates (80) have a profile (p) on the side facing the working layer (7).

5. Lining according to claim 1 or 2, where an insulating layer (6) is provided between the side wall (4) of the vessel (1) and the working layer (7).

6. Lining according to claim 5, where the insulating layer (6) consists of a sprayed-on mass hardened at room temperature, preferably of fireclay or high alumina.

7. Lining according to claim 1 or 2, where the working layer consists of sintered magnesite, preferably with increased lime content of more than 7 % CaO, sintered dolomite or mixtures of sintered magnesite and sintered dolomite with chromite or corundum.

8. Lining according to claim 1 or 2, where the working layer (7) contains sinter additions such as iron oxide, boric acid, boric compounds, dry water glass or micro-powder from metal oxides.

9. Process for the manufacture of a lining according to one of claims 1 or 5 to 8 having the following steps:
- introduction of a template with clearance from the vessel wall,
- filling of the area between the vessel wall and the template with the fill for the working layer,
- compression of the fill preferably by vibration, shaking or tamping,
- further movement of the template to the next wall section to be lined or removal of the template,
- application of the cover layer (8) to the inner side of the fill,
- drying and hardening of the refractory cover layer,
- heating of the lining.

10. Process according to claim 9, where a masking compound is selected which bonds ceramically through the influence of the temperature of the steel bath and passes the temperature on to the fill material so that it frits on the side facing the steel bath and consolidates.

11. Process according to claim 9 or 10, where the heating of the vessel before the introduction of the steel bath takes place by means of burners.

12. Process according to one of claims 9 to 11, where the introduction of the fill material takes place in positions approximately parallel to the floor of the vessel.

13. Process according to one of claims 9 to 12, where the introduction of the fill material takes place into a vessel with round walls in spiral-shaped positions from the floor region in the direction of the vessel edge.

14. Process according to one of claims 9 to 13, where the introduction of the fill material takes place in two or more concentric layers.

15. Process according to claim 14, where to construct the inner layer(s) a fill material with sinter aids is used.

16. Process according to one of claims 9 to 15, where the cover layer is applied by moulded pressing-on, casting or spinning or spraying.

17. Process for the manufacture of a lining according to one of claims 2 to 8 with the following steps:
- introduction of an annular body comprising refractory plates and determining at least in part the interior of the vessel,
- filling the area between the vessel wall and the annular body with the fill for the working layer,
- compression of the fill preferably by vibration, shaking or tamping,
- heating of the lining.

18. Process according to claim 17 with the condition that the refractory plates have a sufficiently high thermal conductivity in order to pass the temperature of the steel bath on to the fill material in such a way that it frits on the side facing the steel bath and consolidates.

## Revendications

1. Revêtement réfractaire basique (3) pour un récipient métallurgique (1), avec une couche de travail (7), mise en place avant la première chauffe du récipient (1), se présentant sous forme de produit en vrac compacté, composé d'un matériau basique, sec, fixé à l'intérieur du récipient (1) au moyen d'une couche de recouvrement (8) durcie par voie chimique, la couche de travail (7) se présentant partiellement sous forme de couche monolithique après remplissage du récipient (1) avec de l'acier liquide.

2. Revêtement réfractaire basique (3) pour un récipient métallurgique (1), avec une couche de travail (7), mise en place avant la première chauffe du récipient (1), se présentant sous forme de produit en vrac compacté, composé d'un matériau basique, sec, fixé dans la zone des parois latérales (14) du récipient (1), en direction de l'espace intérieur du récipient (1), au moyen d'un corps annulaire composé de plaques (80) réfractaires, la couche de travail (7) se présentant partiellement sous forme de couche monolithique après remplissage du récipient (1) avec de l'acier liquide.

3. Revêtement selon la revendication 2, dans lequel les plaques réfractaires (80) sont sensiblement rectangulaires, le côté le plus long (h) de la plaque s'étendant verticalement.

4. Revêtement selon la revendication 2 ou 3, dans lequel les plaques réfractaires (80) présentent, sur la face tournée vers la couche de travail (7) un profil (p).

5. Revêtement selon la revendication 1 ou 2, dans lequel une couche isolante (6) est prévue entre la paroi latérale (4) du récipient (1) et la couche de travail (7).

6. Revêtement selon la revendication 5, dans lequel la couche isolante (6) est composée d'une masse appliquée par pulvérisation et durcie à la température ambiante, de préférence à base de chamotte ou de produit, réfractaire à haute teneur en alumine.

7. Revêtement selon la revendication 1 ou 2, dans lequel la couche de travail est composée de magnésite frittée, de préférence présentant une teneur en chaux élevée, supérieure à 7 % de CaO, de dolomite frittée ou de mélanges de magnésite frittée et de dolomite frittée, avec un minerai de chrome ou du corindon.

8. Revêtement selon la revendication 1 ou 2, dans lequel la couche de travail (7) contient des additifs auxiliaires de frittage, tels que de l'oxyde de fer, de l'acide borique, des combinaisons du bore, du silicate de potassium sec ou une micropoudre d'oxydes métalliques.

9. Procédé de fabrication d'un revêtement selon l'une des revendications 1 ou 5 à 8, avec les étapes suivantes :
- introduction d'un gabarit à distance de la paroi du récipient,
- remplissage de l'espace entre la paroi de récipient et le gabarit avec le produit en vrac destiné à la couche de travail,
- compactage du produit en vrac, de préférence par vibrations, secouage ou damage,
- continuation de déplacement du gabarit vers la section de paroi à revêtir ensuite, respectivement enlèvement du gabarit,
- application de la couche de recouvrement (8) sur la face intérieure du produit en vrac,
- séchage et durcissement de la couche de recouvrement réfractaire,
- chauffage du revêtement.

10. Procédé selon la revendication 9, dans lequel est choisie une masse de recouvrement, produisant une liaison céramique sous l'influence de la température du bain d'acier et laissant passer la température au matériau en vrac, de sorte que celui-ci se fritte et se renforce du côté tourné vers le bain d'acier.

11. Procédé selon la revendication 9 ou 10, dans lequel le chauffage du récipient s'effectue au moyen de brûleurs, avant introduction du bain d'acier.

12. Procédé selon l'une des revendications 9 à 11, dans lequel l'introduction du matériau en vrac s'effectue en couches à peu près parallèles par rapport au fond du récipient.

13. Procédé selon l'une des revendications 9 à 12, dans lequel l'introduction du matériau en vrac dans un récipient à parois rondes, s'effectue en couches spirales, en partant du fond du récipient en direction du bord de celui-ci.

14. Procédé selon l'une des revendications 9 à 13, dans lequel l'introduction du matériau en vrac s'effectue en deux ou plusieurs couches concentriques.

15. Procédé selon la revendication 14, dans lequel un matériau en vrac avec des agents auxiliaires de frittage est mis en oeuvre pour la réalisation de la ou des couches intérieure(s).

16. Procédé selon l'une des revendications 9 à 15, dans lequel la couche de recouvrement est appliquée par pressage à la forme, coulée ou centrifugation ou pulvérisation.

17. Procédé de fabrication d'un revêtement selon l'une des revendications 2 à 8, avec les étapes suivantes :
- introduction d'un corps annulaire composé de plaques réfractaires, déterminant au moins partiellement l'espace intérieur du récipient,
- remplissage de l'espace entre la paroi de récipient et le corps annulaire avec le produit en vrac destiné à la couche de travail,
- compactage du produit en vrac, de préférence par vibrations, secouage ou damage,
- chauffage du revêtement,

18. Procédé selon la revendication 17, avec la caractéristique que les plaques réfractaires présentent une conductibilité thermique suffisamment élevée, pour laisser passer la température du bain d'acier au matériau en vrac, de manière que ce dernier se fritte et se renforce, du côté tourné vers le bain d'acier.
